Europäisches Patentamt

European Patent Office

Office européen des brevets

(11) Publication number: **0 397 114 B1**

# EUROPEAN PATENT SPECIFICATION

(45) Date of publication of patent specification: **07.12.94**   (51) Int. Cl.5: **C25B 9/00**

(21) Application number: **90108657.9**

(22) Date of filing: **08.05.90**

The file contains technical information submitted
after the application was filed and not included in
this specification

(54) **Preventing crevice corrosion of titanium surfaces.**

(30) Priority: **09.05.89 US 350073**
**09.05.89 US 350074**
**09.05.89 US 350075**

(43) Date of publication of application:
**14.11.90 Bulletin 90/46**

(45) Publication of the grant of the patent:
**07.12.94 Bulletin 94/49**

(84) Designated Contracting States:
**BE DE ES FR GB IT NL**

(56) References cited:
**EP-A- 0 120 212**
**EP-A- 0 191 248**
**EP-A- 0 275 466**
**WO-A-86/01838**

(73) Proprietor: **THE DOW CHEMICAL COMPANY**
**2030 Dow Center,**
**Abbott Road**
**Midland, Michigan 48640 (US)**

(72) Inventor: **Beaver, Richard Neal**
**10 Forest Lane,**
**Bailey's Prairie**
**Angleton, Texas 77515 (US)**

Inventor: **McMichael, James William**
**426 Southern Oaks**
**Lake Jackson, Texas 77566 (US)**
Inventor: **Burney, Harry Stevens, Jr.**
**303 Four Oak Drive**
**Clute, Texas 77531 (US)**
Inventor: **Byrd, Carl Eugene**
**205 Halbert Street**
**Clute, Texas 77531 (US)**

(74) Representative: **Huber, Bernhard, Dipl.-Chem.**
**et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

## Description

This invention relates to the prevention of titanium crevice corrosion portions of electrolytic cells, and ancillary portions of the cells, especially those used for electrolytic decomposition of alkali metal chlorides to produce caustic and hydrogen at the cathode and chlorine at the anode. Such cells are usually referred to as chlor-alkali cells.

Crevice corrosion is a well known phenomenon which occurs in inner interstitial parts of chlor-alkali cells, and its adjoining pipes and passageways, having titanium and titanium alloys in contact with chloride solutions. While titanium and its alloys are anti-corrosive materials themselves and inherently have excellent corrosion resisting properties, its superficial portions are not immune to crevice corrosion, especially in the close confines of areas in which titanium has portions, such as flanged areas, which are joined with other surfaces to form a tight seal.

For example, it is well known that titanium surfaces used in chlor-alkali service, particularly at flanged parts in the electrolytic cell, and its ancillary pipes and flow passageways, provide portions of a gasketed seal which, in most cases, must be protected by the application of some type of coating or paint which will inhibit or prevent crevice corrosion. U. S. Patent No. 3,857,773 uses a rubber gasket substantially free of calcium adjacent to a titanium surface as a means of preventing crevice corrosion. Membrane bipolar cells have been operated with ion exchange membranes in direct contact with titanium surfaces which have no protective coatings; or usually, either polytetrafluoroethylene gaskets, such as Gore-Tex® gasket tape manufactured by W.L. Gore & Associates, or ethylene propylene diene (EDPM) rubber gaskets are used directly against an uncoated titanium surface, such as a titanium electrode frame or a titanium pan covering an electrode frame member, during assembly of the cell. In membrane cells with no protective coating in the seal areas, significant crevice corrosion occurs.

For membrane chlor-alkali cells, a commonly used crevice corrosion prevention coating is a coating of a mixed oxide layer of an oxide of a platinum group element and an oxide of an anti-corrosion metal as described in U.S. Patent Nos. 4,082,900 and 4,154,897 specifically for use in membrane cells. Examples of the oxide of a platinum group element are those of iridium, platinum, ruthenium, rhodium, and palladium. Examples, of the oxide of an anti-corrosion metal are those of titanium, tantalum, zirconium, niobium, silicon, and aluminum. An example of a crevice corrosion prevention coating of mixed oxides is a DSA® (dimensionally stable anode) coating. A DSA coating is a valve metal anode with an electrocatalytic conductive coating thereon. Examples of electrocatalytic conductive coatings are described in U.S. Patent Nos. 3,632,498 and 3,711,385. For chlorine production, the coating is usually a mixture of $TiO_2$ and $RuO_2$. These coatings exhibit excellent corrosion prevention performance, but require an application temperature of greater than 450°C.

Heretofore, $RuO_2$ and $TiO_2$ mixtures such as the DSA coatings have been used in cells for corrosion protection. While these types of coatings provide corrosion protection, the coatings require a high temperature, usually above 400 degrees C, for their application.

Small amounts of metals or metal oxides, where the metal is Ni, Cu, or Mo are also known to suppress crevice corrosion. For example, U.S. Patent No. 3,925,185 discloses incorporating into a protective blanket or gasket sealing means a mixture of metallic nickel and nickelous oxide to provide crevice corrosion protection for the base of a diaphragm type cell. The use of these metals in a membrane chlor-alkali process is limited, however, since these metals can poison the DSA coated anodes and foul membrane separators.

It is also known to use a polyvinylidene fluoride material such as Kynar™ as a binder material mixed with a platinum oxide. Such a mixture has been used to coat an electrode to provide an oxygen anode having a low oxygen overvoltage as described in U.S. Patent No. 3,798,063. However, the Kynar and platinum oxide composition mixture requires a temperature of 210°C to 260°C in order to melt flow the Kynar in order to obtain good adherence to the substrate.

It is also known to use a composition as described in U.S. Patent No. 3,562,124 which comprises an organic or inorganic binder and a filler material, the filler material constituting a mixture of conductive metal particles more anodic than the metallic surface to be protected and a comminuted refractory ferro alloy. This composition and process has the disadvantages of a binder material which is not chemically stable in the anolyte of a membrane chlor-alkali cell and the disadvantage of a ferro alloy, which can dissolve into the anolyte and then poison the membrane separator.

EP-A-0 191 248 discloses a lead-acid storage battery, wherein the grids of the electrodes are coated with a protective electronically conductive coating about 10 to 200 $\mu$m thick, said coating comprising a film-forming binder selected from an acrylic/polysiloxane polymer blend, a chlorosulfonated polyethylene/epoxy resin blend, a chlorosulfonated ethylene vinyl acetate polymer/epoxy resin blend, copolymer of vinylidene fluoride/hexafluoropropylene, polytetrafluoroethylene, copolymer of tetrafluoroethylene/perfluoroalkoxy vinyl ether, copolymer of tetrafluoroethylene/hexafluoropropylene, polyvinylidene fluoride, fluorinated dioxole polymer, copolymer of fluorinated dioxole/tetrafluoroethylene, copolymer of fluorinated dioxole/vinylidene fluoride, copolymer of fluorinated dioxole/chlorotrifluoroethylene and electronically conductive, finely divided filler material in a filler-to-binder weight ratio of about 50/100 to 300/100 and the binder containing filler has an electrical volume resistivity of about 0.1-50 ohm.cm. Examples for conductive filler materials are e.g. mixed titanium and ruthenium oxide pigments.

EP-A-0 275 466 discloses a composite membrane/electrode structure comprising: a substantially planar ion-exchange membrane having a plurality of islands of catalytically active particles bonded to at least one planar surface of the membrane, wherein said islands have a diameter or width of from 6 $\mu$m to 1 cm and wherein up to about 75% of the membrane surface is covered with said catalytically active particles. Optionally and preferably the active particles are held together by a binder. Preferred binders include a variety of fluoropolymers. The use of these binders as anti-crevice corrosion material is not described.

It is desired to provide a composition for preventing or inhibiting titanium crevice corrosion in the seal areas of the cell structure. It is desired to provide an anti-crevice corrosion composition which can be applied to the sealing surfaces of titanium parts, or to other seal surfaces which are to be used in sealing engagement with the titanium, with minimum heating of the titanium seal surfaces, or other seal surfaces.

It is especially desired to provide an anti-crevice corrosion composition which can be used as a "touch-up" or re-application composition with minimum heating, especially in the event the cell assembly needs to be disassembled and then reassembled.

It is also desired to provide an anti-crevice corrosion coating useful for all the electrolytic cell component surfaces in the sealing areas, particularly, for example, the cell's gasket sealing surfaces, the peripheral sealing surfaces of the membrane and the peripheral sealing surfaces of the cell's fine titanium anode mesh which cooperates with other sealing surfaces in sealing the cell.

It will be understood, of course, that in each cell compartment of a "filter press" apparatus which usually contains a plurality of compartments prepared by compressing cell components, the membrane separates an anode and a cathode to form an anode section (in which chlorine is evolved) and a cathode section (in which caustic and hydrogen are evolved) during electrolysis.

In addition, it is desired to provide an anti-crevice corrosion composition which is more economical on applying an initial coating to a substrate, applying a touch-up coating to small areas or applying a completely new coating to a surface at the end of the life of the initial coating when compared to known alternatives. For example, it is desired to provide a dispersion wherein the content of some of the constituents in the dispersion is lower than that of mixed oxide layer type coatings of the prior art.

Subject-matter of the present invention is an electrolytic cell-assembly of the filter-press type according to claim 1. Preferred embodiments are subject-matter of claims 2 to 6.

A further subject-matter of the present invention is the use of a cured mixture of an oxide of at least one platinum group metal oxide, a fluorocarbon polymer binder material and, optionally, at least one valve metal oxide as an anti-corrosion material, wherein the fluorocarbon polymer is as defined in claim 7. A preferred embodiment is subject-matter of claim 8.

Still a further subject-matter of the present invention is a method for preventing titanium-crevice corrosion in an electrolytically cell-assembly structure, which contains at least one titanium surface according to claim 9. Preferred embodiments are subject-matter of claims 10-14.

The invention is directed to an electrolytic cell of the filter press type, and its ancillary pipes and passageways, wherein there are a plurality of sealing surfaces, at least one of the sealing surfaces comprising a titanium component, wherein crevice corrosion of the titanium in the seal area is averted by using, in the seal area, a coating of a composition comprising an oxide of a platinum group metal and a fluorocarbon polymer binder material. The coating composition can be applied to the titanium seal surface itself, or to a sealing surface that is in contact with a titanium surface, or to both. The composition is then cured or dried by the application of low temperature heat and serves the purpose of preventing titanium crevice corrosion in the seal areas in which the coated seal surfaces are used.

Alternatively, the anti-crevice corrosion composition can be prepared as a free-standing film and the film then used as a sealing member between other sealing surfaces in the sealing area of the cell assembly to provide anti-crevice corrosion for the titanium seal surfaces.

Figures 1-5 are intended as visual aids for relating the cell structures and the location of the anti-crevice corrosion coating or film in reference to the sealing surfaces of the titanium.

Figure 1 is an exploded, cross-sectional view of the flange portion of an electrolytic cell assembly employing the coating composition of the present invention on a titanium frame member of that assembly.

EP 0 397 114 B1

Figure 2 is an exploded, cross-sectional view of the flange portion of an electrolytic cell assembly employing the coating composition of the present invention on the surface of a gasket member of that assembly.

Figure 3 is an exploded, cross-sectional view of the flange portion of an electrolytic cell assembly employing the coating composition of the present invention on the peripheral portion of the surface of a membrane member of that assembly, in contact with the titanium.

Figure 4 is an exploded, cross-sectional view of the flange portion of an electrolytic cell assembly employing the coating composition of the present invention on the peripheral flange portion of the surface of a titanium liner member of that assembly.

Figure 5 is an exploded, cross-sectional view of the flange portion of an electrolytic cell assembly employing the coating composition of the present invention as a film member interposed between a flange portion of the surface of a titanium frame member and a gasket of that assembly.

The present invention is an electrolytic cell assembly having an anti-crevice corrosion composition coated on, or in contact with, titanium surfaces in the seal areas. The coating composition is applied in the form of a suspension or dispersion of an activating oxide of a platinum group metal or cobalt oxide and a fluorocarbon polymer material and is referred to herein as a "paint" because of its paint-like appearance and consistency, and because the dispersion can be applied to surfaces with a brush or other applicator similar to those used with paints. Optionally the paint can contain an oxide of a film-forming metal, especially titanium. Alternatively, the coating composition can be formed and dried on a surface to which it does not appreciably adhere and from which it can be peeled as an integral, self-supporting film. The film can then be used in the seal against the titanium surface.

In its broadest scope, the composition of the "paint" of the present invention includes an effective amount of at least a first plurality of electrically conductive particles and an effective amount of a polymer binder material, wherein the electrically conductive particles and binder material are dispersed in a carrier agent. The carrier agent is subsequently removed from the dispersion after the dispersion is applied to the surface of a substrate leaving a coating mixture of electrically conductive particles and polymer binder material on the surface.

The plurality of electrically conductive particles suitable for use in the dispersion of the present invention include, for example, activating substances such as oxides of platinum group metals, i.e., ruthenium, iridium, rhodium, platinum, palladium, either alone or in combination with an oxide of a film-forming metal. Other suitable activating oxides include cobalt oxide either alone or in combination with other metal oxides. Examples of such activating oxides are found in U.S. Patents 3,632,498; 4,142,005; 4,061,549; and 4,214,971. The oxides of ruthenium or palladium are preferred because they are relatively more economical to use and more readily available than the other Pt group metals. Osmium, for example, is more toxic and volatile.

The amount of oxide of a platinum group metal present in the paint composition of the present may range from about 0.1 to about 10 percent by weight (wt. %) based on the total weight of the paint, preferably from about 1.0 to about 4.0 wt. %, and more preferably from about 1.3 to about 3.3 wt. %.

As a second component of the paint composition, the polymer binder material used is a fluorocarbon polymer as defined in claim 1. Non-ionic (thermoplastic) forms of fluorocarbcn polymers described below are suitable for use in the present invention. The present invention can also use salt forms of the fluorocarbon polymers described below.

Such fluorocarbon polymers usually have an equivalent weight (EW) in the range of from about 500 to about 2000. The polymer used in the present invention preferably has an EW in the range of about 500 or greater when in a sulfonic acid polymer form and greater than 700 EW for a carboxylic acid polymer form and preferably the EW of the polymer is kept below about 1000 EW.

The fluorocarbon polymer can be in its thermoplastic form. It is in a thermoplastic form when it is made and before it is converted into an ion exchange form. By thermoplastic form, it is meant, for instance, that the polymer has $SO_2X$ pendant groups rather than ionically bonded $SO_3Na$ or $SO_3H$ pendant groups, where X is -F, $-CO_2$, $-CH_3$, or a quaternary amine.

Fluorocarbon materials for use in forming the dispersion are copolymers of monomer I with monomer II (as defined below). Optionally, a third type of monomer may be copolymerized with I and II. The first type of monomer is represented by the general formula:

$$CF_2 = CZZ' \quad (I)$$

where:

Z and Z' are independently selected from the group consisting of -H, -Cl, -F, or $-CF_3$.

4

The second monomer consists of one or more monomers selected from compounds represented by the general formula:

$$Y\text{-}(CF_2)a\text{-}(CFR_f)_b\text{-}(CFR_{f'})_c\text{-}O\text{-}[CF(CF_2X)\text{-}CF_2\text{-}O]_n\text{-}CF=CF_2 \qquad (II)$$

where:

Y is selected from the group consisting of $-SO_2Z$, $-CN$, $-COZ$, and $C(R^3f)(R^4f)OH$;

Z is I, Br, Cl, F, OR, or $NR_1R_2$;

$R^3f$ and $R^4f$ are independently selected from the group consisting of perfluoroalkyl radicals having from 1 to about 10 carbon atoms;

$R_1$ and $R_2$ are independently selected from the group consisting of H, a branched or linear alkyl radical having from 1 to about 10 carbon atoms or an aryl radical;

a is 0-6;

b is 0-6;

c is 0 or 1;

provided $a+b+c$ is not equal to 0;

X is Cl, Br, F, or mixtures thereof when $n>1$;

n is 0 to 6; and

$R_f$ and $R_{f'}$ are independently selected from the group consisting of -F, -Cl, perfluoroalkyl radicals having from 1 to about 10 carbon atoms and fluorochloroalkyl radicals having from 1 to about 10 carbon atoms.

Particularly preferred is when Y is $-SO_2F$ or $-COOCH_3$; n is 0 or 1; $R_f$ and $R_{f'}$ are -F; X is -Cl or -F; and $a+b+c$ is 2 or 3.

The third and optional monomer suitable is one or more monomers selected from the compounds represented by the general formula:

$$Y'\text{-}(CF_2)_{a'}\text{-}(CFR_f)_{b'}\text{-}(CFR'_f)_{c'}\text{-}O\text{-}[CF(CF_2X')\text{-}CF_2\text{-}O]_{n'}\text{-}CF=CF_2 \qquad (III)$$

where:

Y' is F, Cl or Br;

a' and b' are independently 0-3;

c' is 0 or 1;

provided $a'+b'+c'$ is not equal to 0;

n' is 0-6;

$R_f$ and $R_{f'}$ are independently selected from the group consisting of Br, Cl, F, perfluoroalkyl radicals having from about 1 to about 10 carbon atoms, and chloroperfluoroalkyl radicals having from 1 to about 10 carbon atoms; and

X' is -F, -Cl, -Br, or mixtures thereof when $n'>1$.

Conversion of Y to ion exchange groups in their salt form is well known in the art and consists of reaction with an alkaline solution such as sodium hydroxide or potassium hydroxide. This hydrolyzed form, i.e, ionic conductive form, is the preferred form of the polymer when used in an electrolytic cell for the purpose of preventing crevice corrosion. For example, when the paint composition is applied to a membrane of an electrolytic cell, for ease of fabrication, the polymer is in its thermoplastic form and then hydrolyzed to its ionic form.

When used as a paint composition, applied for example to a gasket member or frame member of an electrolytic cell, the polymer can be either in a thermoplastic or ionic form.

Preferably, the polymer used as the binder in the composition may include any of the melt fabricable fluoro-ionomers which will form a film and which can be dissolved in a suitable solvent or dispersed in a suitable non-solvent carrier agent and, in general, which can be used as a binder for "sticking" small particles onto a micro-roughened Ti surface. The form of the polymer can be sulfonyl, H+, carboxylate, ester or $Na^+$.

In preparing the coating composition, the fluorocarbon polymer at the start may be in any physical form. However, it is preferably in the form of fine particles to speed dissolution and dispersion of the particles into the carrier agent. Preferably, the particle size of the polymers is from about 0.01 $\mu$m to about 840 $\mu$m most preferably, less than about 250$\mu$m.

The amount of fluorocarbon polymer present in the coating composition of is generally from about 0.5 to about 10 wt.% based on the total weight of the paint, preferably from about 2.0 to about 4.0 wt.% and more preferably from about 2.5 to about 3.5 wt.%.

The carrier agent useful in the present invention includes solvents and non-solvents. For example, non-solvents may include water, alcohols, and ethers, fluorocarbons (e.g., Freons®), ketones, chlorocarbons (e.g. chlorinated solvents) and mixtures thereof. For example, solvents may include 1,2-dibromotetrafluoroethane (commonly known as Freon® 114 B 2):

$BrCF_2\text{-}CF_2Br$

and 1,1,2-trichlorotrifluoroethane (commonly known as Freon® 113):

$ClF_2C\text{-}CCl_2F$

Of these two carrier agents, 1,2-dibromotetrafluoroethane is the most preferred carrier agent. It has a boiling point of about 47.3 degrees C, a density of about 2.156 grams per cubic centimeter, and a solubility parameter of about 7.2 hildebrands.

The amount of solvent or non-solvent used in the present invention is sufficient to make up the difference of the total paint composition.

The coating composition may include a sufficient amount of a second platinum group metal oxide distributed in close proximity to the titanium surface to be protected from crevice corrosion. The amount of second platinum group metal oxide may be the same as described with respect to the first platinum group oxide.

Optionally, the coating composition may include an oxide of a valve metal or film-forming metal of periodic groups IVB, VB and VIB which are able to withstand the corrosive conditions within a chlorine cell. An example of a preferred valve metal is $TiO_2$. Other valve oxides that can be substituted for $TiO_2$ include, for example $TaO_2$ and $ZrO_2$.

The amount of valve metal (also known as "film-forming metal") used in the coating composition may be from about 0.05 wt.% to about 5 wt.% based on the total weight of the paint, preferably from about 0.5 wt.% to about 2.0 wt. and more preferably to about 0.7 wt.% to about 1.6 wt.%.

The Pt group metal oxide used in the present invention is preferably $RuO_2$. A suitable $RuO_2$ compound can be purchased from Johnson Matthey, material I.D. # 800-2JX, with 99% of the material having an agglomerate size of 1 $\mu$m ± 0.1$\mu$m.

One method useful in obtaining a suitable oxide of a Pt group metal, for example the $RuO_2$, is described in U.S. 3,798,063 involving the dissolution of ruthenium trichloride in an acid solution followed by treatment with a base to the alkaline side and finally by acidification to a pH within the range of 6-6.5. The resulting suspension is washed thoroughly with distilled water until free of the salt of neutralization, dried at 100 degrees C and fired at elevated temperatures, generally not in excess of 500 degrees C. Other methods may be used, provided a relatively clean finely divided $RuO_2$ is obtained.

However, the particle size of the Pt group metal oxide may vary and while generally a fine particle size such as less than 0.1 $\mu$m is suitable, other useful particle sizes of the oxide may be from about 0.5 to about 10 $\mu$m The platinum metal oxide can be combined with the fluorocarbon polymer by any known method such as ball milling or by simple agitation by stirring.

The total percent solids, including the platinum group metal and polymer, is between about 5 and about 30 percent. The maximum concentration of polymer will usually be up to about 10% by weight. A portion of the solids is typically not in solution when a non-solvent is used, but when the paint is mixed well, the solids form a suspension or dispersion. When a solvent such as 1,2-dibromotetrafluoroethane is used then the solids form a solution.

To dissolve and disperse the polymer and platinum metal oxide particles into the carrier agent, the polymer and platinum metal oxide particles are placed in contact with the carrier agent of choice and intimately mixed. The polymer, platinum metal oxide particles and the carrier agent may be mixed by any of several means including, but not limited to, shaking, stirring, milling or ultra sonic means. Thorough, intimate contact between the polymer, platinum metal oxide and the carrier agent is needed for optimum dissolution and/or dispersion.

Once the solution or dispersion is applied, as a coating, for example, to a titanium substrate surface or other sealing surface for sealing to the titanium, the coating is subjected to a thermal bonding treatment such that the polymer approaches or achieves its melt flow temperature in order to affect bonding of the paint to the substrate.

The temperature range needed to cure the paint is that needed to drive off or remove the carrier agent from the composition and to melt flow the polymer. Generally, the temperature used in the present invention is below about 270°C, preferably below about 100°C, and more preferably below about 30°C. The temperature range can be from about 25°C to about 270°C. A temperature below about 25°C can cause poor bonding and a temperature above about 270°C can cause polymer decomposition.

The coating composition provides an economical and practical means for applying a crevice corrosion "paint" to titanium gasket surfaces of electrolytic cells, piping, and equipment in, for example, membrane chlor-alkali plants.

One advantage of the coating composition is that it requires only a moderate temperature to "cure" the "paint". Another advantage is that the components are chemically inert in the anolyte environment of a membrane chlor-alkali cell thus avoiding possible damage or contamination to the anode or membrane.

Another advantage is that relatively small Pt group oxide particles can be evenly and uniformly dispersed, for example, by ball milling or other suitable shearing operation, into a polymer, and subsequently the amount of Pt group metal usage per unit area can be minimized. For example, the amount or loading of the platinum group metal (not the oxide) on the substrate generally is from about 25 to about 1000 micrograms per square centimeters (as Pt group metal), preferably from about 200 to about 500 micrograms/$cm^2$ and more preferably from about 400 to 600 micrograms/$cm^2$. Less than 25 micrograms/$cm^2$ may lead to crevice corrosion under long-term operating conditions and above about 1000 micrograms/$cm^2$ may be uneconomical to use. The loading of the Pt group metal is measured by techniques well known in the art such as x-ray fluorescence.

Another advantage of the present composition over prior art compositions such as a DSA coating is that the DSA coating is dissolved by caustic, whereas the coating of the present invention is resistant to chemical attack by nature of the fluorocarbon polymer. The fluorocarbon polymer is also more chemically inert than Kynar.

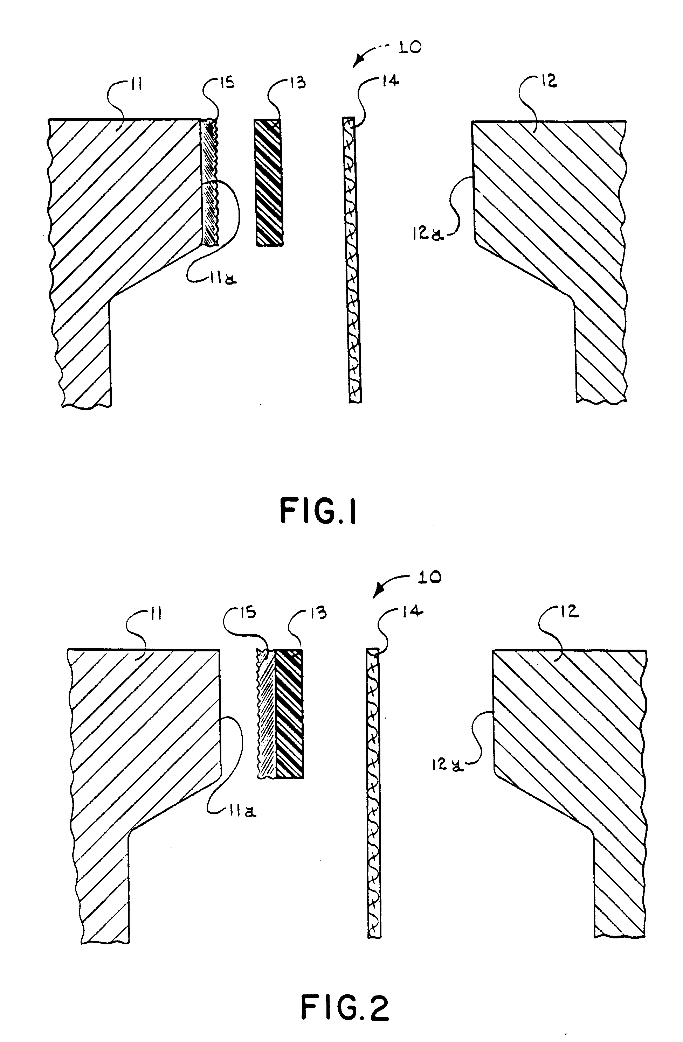

The composition of the instant invention is particularly useful for coating titanium surfaces in chlor-alkali cells such as shown in Figures 1-5. The titanium surface material of the chlor-alkali cell or any other apparatus used in accordance with the present invention may include a pure titanium metal or a titanium alloy such as Ti-5Ta, Ti-6Al-4V, Ti-5Al-2Cr-Fe, Ti5A-2.5Sn, Ti-15Mo-5Ar, Ti-15Mo-5Ar-3Al and combination of these alloys.

More particularly, the titanium alloys which may be used in the present invention, which themselves offer resistance to crevice corrosion, include ASTM grades 7 and 12. Grade 7 has 0.15% Pd. Grade 12 has 0.3% Mo and 0.8% Ni. Grade 12 has a higher resistance to crevice corrosion than Grade 1 (commercially pure titanium). Grade 7 offers a higher resistance to crevice corrosion than grade 12 but grade 7 may have a higher cost than grade 12. Grade 12, on the other hand, may have less ductility than grade 1. Grade 7 has about the same ductility as Grade 1, but less ductility than the forming grade of titanium, which can be used to cold press pans for electrolytic cells. Grade 12 which may cost a few percent more than Grade 1, might be considered in applications where ductility and electrical conductivity do not have to match those of Grade 1. Grade 1 is preferred for pan forming because of cost and ductility. Grade 1 needs an anti-crevice corrosion coating, whereas grade 7 and 12 already have improved resistance to crevice corrosion.

With reference to Figures 1-5, there is shown elements of an electrolysis cell of the filter press type, generally indicated by numeral 10. The cell 10 includes, for example, electrode frame members 11, having seal surface 11a, and frame member 12, having seal surface 12a, with a gasket member 13 and a membrane 14 interposed between the frame members 11 and 12. A coating 15 of the present invention is applied to the surface of titanium materials employed in the cell assembly.

In Figure 1, there is shown frame member 11 made of a titanium material with the coating 15 deposited on the flange (seal) surface 11a of the frame member 11. Only the titanium surface, for example an anode titanium frame, in contact with the gasket 13 is coated which is the flange seal portion 11a of the frame member 11. The frame 12 is in this instance a cathode frame and generally is made of nickel and, therefore, is uncoated. However, the frame seal portion 12a may be coated if desired.

In Figure 2, there is shown the coating 15 of the present invention applied to at least one side or surface of the gasket member 13 which is the side that is in contact with the titanium flange seal portion 11a of the frame member 11.

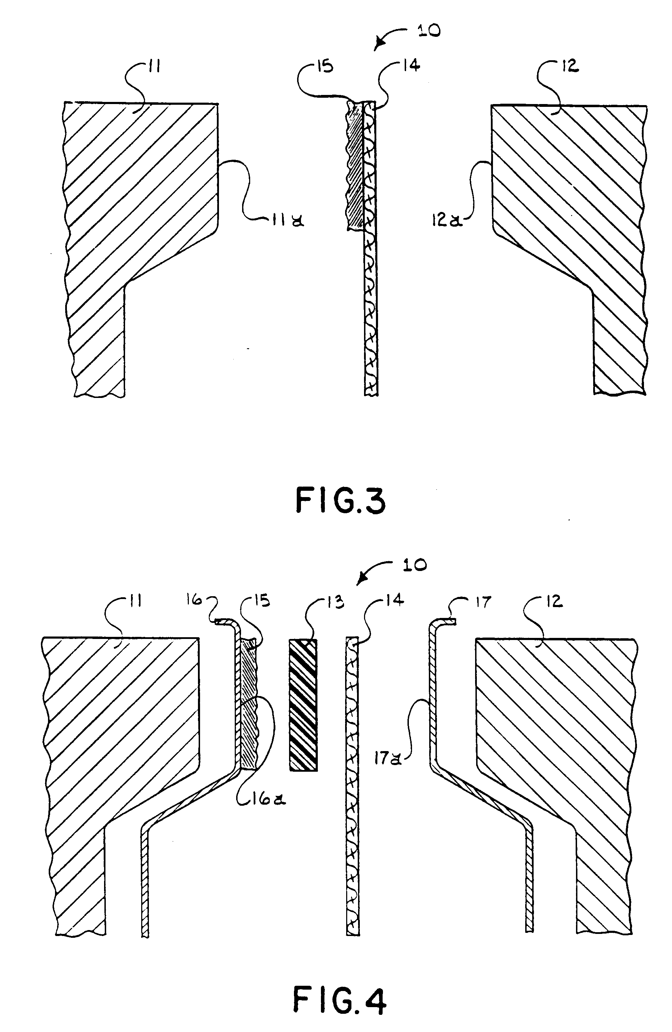

In Figure 3, there is shown an electrolytic cell assembly without a gasket member 13 and a member 14 directly in contact with the seal surface 11a of the titanium frame member 11. In this instance, the coating 15 of the present invention is applied to the peripheral portion of one side or surface of the membrane 14.

In Figure 4, there is shown an electrolytic cell assembly including pan members 16 and 17 on the electrode frame members 11 and 12, respectively. See for example U.S. Patent Nos. 4,668,371, 4,666,579, 4,488,946 and 4,604,171 (gopher cells). The pan or liner members 16 and 17 are usually used when the frame members 11 and 12 are made of a different material which are corrosive to the electrolytic cell environment and the liner 16 and 17 are made of a non-corrosive material to protect the frame members. Typically, the anode liner, for example, is made of a titanium material. The coating 15 is then applied to the flange seal portion 16a of the liner 16 which is in contact with the gasket member 13. It is to be understood that in a cell assembly having a liner of titanium the coating 15 may be applied to the gasket surface in contact with the titanium flange portion 16a, or if no gasket is used, on the membrane surface in contact with the titanium flange portion 16a. It is also to be understood that any or all of the elements where titanium crevice corrosion is likely to occur may be coated with the coating 15.

The method of applying the dispersion of the present invention onto the substrate surface includes spraying, brushing, dipping and pouring. Preferably, the dispersion is brushed onto the surface similar to brushing paint on a surface with a paint brush.

The following methods are suitable for fixing the composition of the present invention onto a substrate: (1.) dipping the substrate into the composition, followed by air drying and sintering at the desired temperature with sufficient repetition to build the desired thickness; (2.) spraying the composition onto the substrate is used to advantage for covering large or irregular shapes; (3.) pouring the composition onto the substrate is sometimes used; and (4.) painting the composition with brush or roller has been successfully employed. In addition, coatings may be easily applied with metering bars, knives or rods. Usually, the coatings or films are built up to the thickness desired by repetitive application followed by drying and sintering. Then the composition may be evened out using scraping knives, rods, or other suitable means. The composition can be applied in a single step or in several steps depending on the concentration of the polymer in the composition and the desired thickness of the coating.

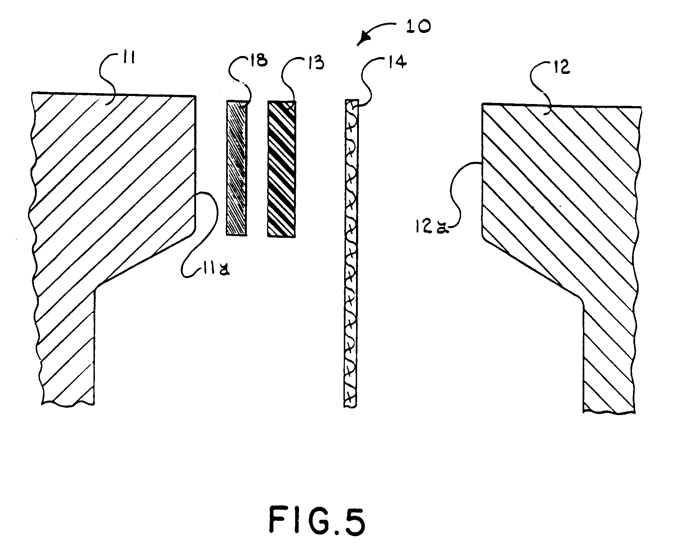

In another embodiment of the present invention, a corrosion resistant film 18 may be prepared to install between the gasket 13, and if no gasket between the membrane, and the titanium surface 11a as shown in Figure 5.

In carrying out the embodiment shown in Figure 5, the dispersion is first poured, sprayed or spread into a desired mold to form the desired shaped corrosion film needed to conform to the shape of the titanium seal surface to which it is applied, such as the flange portion 11a of the electrolytic assembly 10. The mold is then heated at the aforementioned temperatures, to remove the carrier agent and cure the polymer. After curing, the film is removed from the mold and installed in an electrolytic cell assembly for example, as shown in Figure 5.

In still another embodiment of Figure 5, a tape member having a desired width may be formed in any desired length. The tape member can be cut to fit the titanium seal surface 11a length and layered, for example, in a picture frame configuration. For example, in an electrolytic cell, the cut strips of tape members can be positioned on the titanium surface by crossing the corners or dovetailing joints and the like.

Example 1

Preparation of a $RuO_2$ stabilized with $TiO_2$ powder

The following components and amounts of the components were used:

| Component | Grams used |
|---|---|
| $RuCl_3 \cdot xH_2O$ (40% Ru) | 10.4 |
| $Ti(OC_3H_7)_4$ (16.7% Ti) | 28.8 |
| HCl (37% by wt.) | 18.8 |
| isopropyl alcohol | 213 |

In a glass container, add the $RuCl_3$ and HCl and part of the isopropyl alcohol. Mix well by stirring until all solids are dissolved. Add remaining isopropyl alcohol. Then add tetra isopropyl titanate while stirring. Continue stirring for at least 1 to 4 hours to ensure complete mixing. The calculated mole composition of the above when oxidized in air at elevated temperature yields 30% $RuO_2$ and 70% $TiO_2$.

In a Pyrex container, weigh out 50 grams of $TiO_2$ powder such as Baker Reagent # 1-4162 (99.9% +) $Ti(N)O_2$. Add all of the above coating solution and mix well by stirring until all solids are coated. Evaporate the isopropyl alcohol from the mixture by heating on a hot plate in a well ventilated fume hood. Break up any large clumps and then heat in air to 490-510 degrees C for about one hour. The powder can then be sized by screening or optionally ball milled to obtain a uniform size.

A thermoplastic ionomer powder is hydrolyzed as follows:

Insert 30 grams of sulfonic acid polymer, made from the preferred monomers of type I and II, with an equivalent weight of 564, in a Ziplock® freezer bag and add 150 grams of 25% membrane grade NaOH caustic. Place the freezer bag in a hot water bath and maintain a temperature of 70 degrees C for 24 hours.

The polymer is converted to the acid form as follows:

Place the contents of the freezer bag in a glass beaker and drain off the caustic. Add 150 grams of 25% $H_2SO_4$ to the beaker. Allow the beaker to stand for 6 hours.

The polymer binder suspension was prepared as follows:

Drain off acid and add about 200 grams of deionized water to wash the polymer. Drain off water and add another 200 grams of water. Drain off water again. Add another 200 grams of water and heat mixture to about 100 degrees C. Let the mixture boil for about 5 minutes. Drain off water. Add another 200 grams of water and boil a second time for 5 minutes. Drain off water and add 200 milliliters of isopropyl alcohol. Stir the mixture well for about 16 hours. The concentration of the polymer can be adjusted by adding or boiling off the isopropyl alcohol.

Add 1.2 grams of $RuO_2$ coated particles from above to 65 grams of a 2% solids, ionomer binder solution from above and stir thoroughly for 16 hours is a glass container.

Example 2

Add the following components together and stir thoroughly for 16 hours in a glass container:

| Component | grams used |
|---|---|
| $RuO_2$ | 1.1 |
| $TiO_2$, 2(micron)$\mu$m | 1.0 |
| 2% solids, from above | 70 |

Example 3

The following procedure was used to prepare a paint composition of a fluorocarbon polymer, $RuO_2$, $TiO_2$, ethanol and water:

A 50 g sample of $TiO_2$ fine powder was coated with a DSA solution. The DSA solution used contained 10.4 g of $RuCl_3$, $H_2O$ (42.29% Ru), 18.8 g concentrated HCl 37%, 270 g isopropanol and 28.8 g tetraisopropyl titanate $[Ti(OC_3H_7)_4]$. The solution was evaporated to a dry powder and then baked for one hour at 475°C. The resultant powder was ball milled. The resultant coated $TiO_2$ was mixed with a polymer manufactured by The Dow Chemical Company of a sulfonic acid polymer, made from the preferred monomers of type I and II, with an equivalent weight of 564.

The resultant paint was applied to the grit blasted surface area of another seal area of a titanium anode flange and cured using a hot air gun. The cells used in this example were 1.52 by 3.66 m (5 feet by 12 feet) size pilot cells of the gopher cell type as described above.

The Ti gasket surfaces of an anode terminal cell (ATC) were damaged as a result of hydraulic leaks at the top of the membrane during a run in the 5 x 12 pilot plant. Upon visual inspection the ATC was observed to have portions of a previously applied DSA coating removed from its top flange surface adjacent to the hydraulic leaks in the top of the membrane. The 32% NaOH solution "jetting" through the hydraulic leaks, in combination with an anodic potential, caused the DSA coating to dissolve. The loss of the protective coating resulted in crevious corrosion. The worst corrosion caused a portion of Ti to dissolve, to a depth of about half the thickness of the Ti flange material over an area of about 0.8 $cm^2$ (1/8 square inch).

The following procedure was used to repair the damaged areas of this 5 x 12 ATC. The cell was removed from the electrolyzer to an open area, washed with water, and dried. The cell was laid in a horizontal position and the areas to be repaired were cleaned with a chlorinated organic solvent, CHLOROTHENE® solvent, and cotton rags. The electrode areas adjacent to the repaired areas were masked off with duct tape. The areas were then "lightly" grit blasted using a small portable sand blaster. Since the sand blaster was small and easily directed, no tape was used on the DSA coated Ti flange surface. The grit was alumina and the grit size was about 0.15-0.125 mm (100-120 mesh) (U.S. Standard Sieve Size). After grit blasting the Ti gasket surface had a light grey color. The blasted area was cleaned with a stream of compressed plant air and the duct tape was removed.

A glass container containing a paint solution of the sulfonyl fluoride ionomer polymer, $RuO_2$, $TiO_2$, ethanol, and water was shaken in order to thoroughly mix any settled solids. The paint was then immediately applied in a thin even coat to one of the damaged areas by means of a small paint brush. The paint solution was allowed to overlap the adjacent areas which were not blasted and which still had undamaged DSA coating. The total amount of Ru as metal in the "paint" was about 1.0%.

The total area that was painted was about three square inches. The paint was then "cured" by heating with a hot air gun. This hot air gun is rated at 500°F (260°C), 14 amps, 120 volts. The solvents in the coating were removed during the first few seconds of heating by holding the hot air gun several inches away from the surface. The heating process was continued for about 3-4 minutes with the tip of the hot air gun about 0.64 to 1.27cm (1/4 to 1/2 inch) from the surface. Upon completing the "curing" of the paint, the coated area appeared light grey in color. A second solution containing only polymer in solvent was then applied and heat cured in the same manner.

Four other damaged spots were repaired in the same manner. Two of the damaged areas were coated with two base coats which contained $RuO_2$ and $TiO_2$ and three areas had only one base coat. All five repaired areas had only one top coat which contained only Dow polymer in a 4.0 wt.% solution. During the heating steps a wet sponge was used to keep the fine Ti anode mesh from expanding and possible breaking the small weak welds which attach it to the heavy mesh anode. The fine Ti anode mesh did expand a small amount during the heating operation, but no welds were broken.

The cell was then washed with river water to remove the remaining alumina from the anode compartment. The ATC was then air dried and a strip of Teflon tape was placed around the perimeter of the anode. Half of the 1.9cm (3/4inch) wide tape overlapped onto the anode gasket surface. The cell was then placed back into the electrolyzer. Used Flemion® 865 (Asahi Glass) membranes were installed, the cells started, and operated for about 60 hours at 90°C, $0.3A/cm^2$ (2.0 ASI), and 103 kPa g (15psig). After disassembly and inspection, the repaired areas showed no signs of coating loss or crevice corrosion. The flange surface was wiped clean with Chlorothene® Solvent and new Teflon tape installed as in the previous run.

New Flemion® 855 membranes were then installed and the cells were operated at the above conditions for 78 days. After cell disassembly and upon inspection of the ATC anode surface, it was noted that one area had a slight indication that some new crevice corrosion was starting in the previously pitted area. This new corrosion still did not penetrate the thin Ti flange and during the 78 day run no leaking at any of the cell gaskets occurred.

Other embodiments can occur to practitioners of these relevant arts, upon reading this disclosure, without departing from the concepts of the presently claimed invention.

## Claims

1. An eleotrolytic cell assembly of the filter-press type comprising:
   (a) at least two adjacent cell assembly members having flanges which provide sealing surfaces that cooperate to seal a portion of the assembly,
       at least one of the cell assembly members having titanium as a sealing surface, said sealing surface being in cooperation with other sealing surfaces, said titanium surface being a surface which is vulnerable to crevice corrosion in the seal areas when assembled into a sealed cell assembly and subjected to the environment within the cell during operation thereof,
   (b) membrane means interposed between cooperating electrode frame members, at least one of which comprises titanium having a seal surface, with the peripheral portion of the membrane being operable as seal means with other seal means in sealing the cell frame members, the non-peripheral portion of the membrane serving to divide the area of the cell which is defined by the sealed frame members, into a cathode section and an anode section,
   (c) optionally, a gasket material in cooperation with at least some of the titanium sealing surfaces of the cell assembly members to aid in sealing the cell, and characterized by
   (d) an anti-crevice corrosion material comprising a coating or film for preventing crevice corrosion of the titanium by being situated on the sealing surface of the titanium itself, or on the sealing surface of another member which is in sealing cooperation with the titanium surface, whether said other member is a gasket or a membrane or both a gasket and a membrane,
       said anti-crevice corrosion coating or film comprising a cured mixture of an oxide of at least one platinum group metal and at least one fluorocarbon polymer binder material and, optionally, at least one valve metal oxide wherein the fluorocarbon polymer is a copolymer of monomer I with monomer II, wherein monomer I is represented by the general formula

$CF_2 = CZZ'$     (I)

where:

Z and Z' are independently selected from the group consisting of -H, -Cl, -F, or -$CF_3$;

wherein monomer II consists of one or more monomers selected from compounds represented by the general formula:

$Y-(CF_2)a-(CFR_f)_b-(CRF_{f'})_c-O-[CF(CF_2X)-CF_2-O]_n-CF = CF_2$     (II)

where:

Y is selected from -$SO_2Z$, -CN, -COZ, and $C(R^3f)(R^4f)OH$;

Z is selected from I, Br, Cl, F, OR, or $NR_1R_2$;

$R^3f$ and $R^4f$ are independently selected from perfluoroalkyl radicals having from 1 to 10 carbon atoms;

$R_1$ and $R_2$ are independently selected from H, a branched or linear alkyl radical having from 1 to 10 carbon atoms or an aryl radical;

a is 0-6;

b is 0-6;

c is 0 or 1;

provided a + b + c is not equal to 0;

X is Cl, Br, F, or mixtures thereof when n>1;

n is 0 to 6; and

$R_f$ and $R_{f'}$ are independently selected from -F, -Cl, perfluoroalkyl radicals having from 1 to 10 carbon atoms and fluorochloroalkyl radicals having from 1 to 10 carbon atoms, and optionally,

one or more other monomer selected from compounds represented by the general formula:

$Y'-(CF_2)_{a'}-(CFR_f)_{b'}-(CFR_{f'})_{c'}-O-[CF(CF_2X')-CF_2-O]_{n'}-CF = CF_2$     (III)

where:

Y' is F, Cl or Br;

a' and b' are independently 0-3;

c' is 0 or 1;

provided a' + b' + c' is not equal to 0;

n' is 0-6;

$R_f$ and $R_{f'}$ are independently selected from Br, Cl, F, perfluoroalkyl radicals having from 1 to 10 carbon atoms, and chloroperfluoroalkyl radicals having from 1 to 10 carbon atoms; and where

X' is -F, -Cl, -Br, or mixtures thereof when n'>1.

2. The cell assembly of Claim 1, characterized in that the valve metal oxide is selected from $TiO_2$, $TaO_2$ and $ZrO_2$.

3. The cell assembly of Claim 1 or 2, characterized in that the valve metal oxide is $TiO_2$ and the platinum group metal oxide comprises ruthenium oxide.

4. The cell assembly of Claim 1, 2 or 3, characterized in that the anti-crevice corrosion material is solidified at a temperature below 270°C from a solution or dispersion of the material in a solvent or non-solvent carrier.

5. The cell assembly of Claim 4, characterized in that non-solvent carrier is selected from water, alcohols, ethers or mixtures thereof.

6. The cell assembly of Claim 4, characterized in that the solvent carrier is selected from 1,2-dibromotetrafluoroethane and 1,1,2-trichlorotrifluoroethane.

7. Use of a cured mixture of an oxide of at least one platinum group metal oxide, a fluorocarbon polymer binder material, and, optionally, at least one valve metal oxide as an anti-corrosion material, characterized in that the fluorocarbon polymer is a copolymer of monomer I with monomer II, wherein monomer I is represented by the general formula:

$$CF_2 = CZZ' \quad (I)$$

where:

Z and Z' are independently selected from -H, -Cl, -F, or $-CF_3$;

monomer II comprising one or more monomers selected from compounds represented by the general formula:

$$Y\text{-}(CF_2)a\text{-}(CFR_f)_b\text{-}(CFR_{f'})_c\text{-}O\text{-}[CF(CF_2X)\text{-}CF_2\text{-}O]_n\text{-}CF = CF_2 \quad (II)$$

where:

Y is selected from $-SO_2Z$, -CN, -COZ, and $C(R^3f)(R^4f)OH$;

Z is I, Br, Cl, F, OR, or $NR_1R_2$;

$R^3f$ and $R^4f$ are independently selected from perfluoroalkyl radicals having from 1 to 10 carbon atoms;

$R_1$ and $R_2$ are independently selected from H, a branched or linear alkyl radical having from 1 to 10 carbon atoms or an aryl radical;

a is 0-6;

b is 0-6;

c is 0 or 1;

provided a + b + c is not equal to 0;

X is Cl, Br, F, or mixtures thereof when n>1;

n is 0 to 6; and

$R_f$ and $R_{f'}$ are independently selected from -F, -Cl, perfluoroalkyl radicals having from 1 to 10 carbon atoms and fluorochloroalkyl radicals having from 1 to 10 carbon atoms, and optionally,

one or more monomers selected from compounds represented by the general formula:

$$Y'\text{-}(CF_2)_{a'}\text{-}(CFR_f)_{b'}\text{-}(CFR_{f'})_{c'}\text{-}O\text{-}[CF(CF_2X')\text{-}CF_2\text{-}O]_{n'}\text{-}CF = CF_2 \quad (III)$$

where:

Y' is F, Cl or Br;

a' and b' are independently 0-3;

c' is 0 or 1;

provided a' + b' + c' is not equal to 0;

n' is 0-6;

$R_f$ and $R_{f'}$ are independently selected from Br, Cl, F, perfluoroalkyl radicals having from 1 to 10 carbon atoms, and chloroperfluoroalkyl radicals having from 1 to 10 carbon atoms; and where

X' is -F, -Cl, -Br, or mixtures thereof when n'>1.

8. Use of the cured mixture of claim 7, characterized in that the valve metal oxide is selected from $TiO_2$, $TaO_2$ and $ZrO_2$, and the platinum group metal oxide is $RuO_2$.

9. A method for preventing titanium crevice corrosion in an electrolytic cell assembly structure which contains at least one titanium surface having a sealing portion for cooperating with at least one sealing sealing surface of at least one other cell assembly member for sealing at least a portion of the cell assembly, said method being characterized by:

(a) coating either the seal portion of the titanium surface, or the cooperating seal surface of the said other cooperating assembly member, or both, with a solution or dispersion of an oxide of a platinum group metal, a fluorocarbon polymer binder material, and, optionally, at least one valve metal oxide, in a solvent or non-solvent carrier to form an anti-crevice corrosion coating on said surface, said fluorocarbon polymer binder material comprising a copolymer of monomer I with monomer II, as defined in claim 1,

(b) heating the so-applied solution dispersion on said seal portion to a temperature sufficient to achieve bonding of the coating to the substrate, while maintaining the substrate at a temperature of less than 270°C, and

(c) bringing the sealing portions into sealing relationship.

12

**10.** The method of Claim 9 characterized in that non-solvent carrier is selected from water, alcohols, ethers or mixtures thereof.

**11.** The method of Claim 10 characterized in that the solvent carrier is selected from 1,2-dibromotetrafluoroethane and 1,1,2-trichlorotrifluoroethane.

**12.** The method of Claim 9 characterized in that the valve metal oxide is selected from $TiO_2$, $TaO_2$, or $ZrO_2$.

**13.** The method of Claim 9 characterized in that the valve metal oxide is $TiO_2$ arid the platinum group metal oxide comprises ruthenium oxide.

**14.** The method of claims 9-13, characterized in that the amount of oxide present in the solution or dispersion ranges from 0.1 to 10 percent by weight based on the total weight of the paint.

**Patentansprüche**

**1.** Elektrolysezellenanordnung vom Filterpressen-Typ, umfassend:
(a) mindestens 2 benachbarte Elemente der Zellenanordnung, die Flansche aufweisen, wodurch Abdichtoberflächen vorgesehen werden, die Zusammenwirken, um einen Teil der Anordnung abzudichten,
wobei mindestens eines der Elemente der Zellenanordnung Titan als Abdichtoberfläche aufweist, wobei diese Abdichtoberfläche mit anderen Abdichtoberflächen zusammenwirkt, und die Titanoberfläche eine Oberfläche ist, die gegenüber Spaltkorrosion in den Abdichtoberflächen anfällig ist, wenn sie in einer abgedichteten Zellenanordnung angeordnet ist und während ihres Betriebes der Umgebung innerhalb der Zelle ausgesetzt wird,
(b) Membranelemente, die zwischen zusammenwirkenden Elektrodenrahmenelementen angebracht sind, wobei mindestens eines davon Titan mit einer Abdichtoberfläche aufweist, und wobei der periphere Teil der Membran mit anderen Abdichtelementen als Abdichtelement zur Abdichtung der Rahmenelemente der Zellen wirken kann, und der nicht periphere Teil der Membran dazu dient, um die Zone der Zelle, die durch die abgedichteten Rahmenelemente definiert ist, in einen Kathodenabschnitt und einen Anodenabschnitt zu teilen,
(c) gegebenenfalls ein Dichtungsmaterial in Zusammenwirkung mit mindestens einigen der Titan-Abdichtoberflächen der Elemente der Zellenanordnung, um die Abdichtung der Zelle zu unterstützen, gekennzeichnet durch
(d) ein Spaltkorrosionsschutzmaterial, das eine Beschichtung oder einen Film zur Vorbeugung der Spaltkorrosion von Titan umfaßt, das auf der Abdichtoberfläche des Titans selbst angebracht ist, oder auf der Abdichtoberfläche eines anderen Elements, das in zusammenwirkender Abdichtfunktion mit der Titanoberfläche steht, unabhängig davon, ob das andere Element eine Dichtung oder eine Membran oder sowohl eine Dichtung als auch eine Membran darstellt,
wobei die Spaltkorrosionsschutz-Schicht oder der -Film eine gehärtete Mischung aus einem Oxid aus mindestens einem Platingruppenmetall und mindestens einem Fluorkohlenstoffpolymerbindermaterial und, gegebenenfalls, mindestens einem Ventilmetalloxid ist, wobei das Fluorkohlenstoffpolymer ein Copolymer des Monomers I mit dem Monomer II ist, worin das Monomer I dargestellt wird durch die allgemeine Formel

CF2 = CZZ'     (I)

worin:
Z und Z' unabhängig voneinander ausgewählt sind aus der Gruppe bestehend aus -H, -Cl, -F oder -CF3;
und worin das Monomer II aus einem oder mehreren Monomeren besteht, ausgewählt aus Verbindungen dargestellt durch die allgemeine Formel:

$Y\text{-}(CF_2)a\text{-}(CFR_f)_b\text{-}(CFR_{f'})_c\text{-}O\text{-}[CF(CF_2X)\text{-}CF_2\text{-}O]_n\text{-}CF = CF_2$     (II)

worin:
Y ausgewählt ist aus $-SO_2Z$, -CN, -COZ und $C(R^3f)(R^4f)OH$;

13

Z ausgewählt ist aus I, Br, Cl, F, OR, oder NR1R2;

R3f und R4f unabhängig voneinander ausgewählt sind aus Perfluoralkylradikalen mit 1 bis 10 Kohlenstoffatomen;

R1 und R2 unabhängig voneinander ausgewählt sind aus H, einem verzweigten oder geradkettigen Alkylradikal mit 1 bis 10 Kohlenstoffatomen oder einem Arylradikal;

a = 0-6;

b = 0-6;

c = 0 oder 1;

mit der Maßgabe, daß a + b + c nicht gleich 0 ist;

X = Cl, Br, F oder Mischungen, wenn n>1;

n = 0-6; und

Rf und Rf' unabhängig voneinander ausgewählt sind aus -F, -Cl, Perfluoralkylradikalen mit 1 bis 10 Kohlenstoffatomen und Fluorchloralkylradikalen mit 1 bis 10 Kohlenstoffatomen, und gegebenenfalls einer oder mehrerer der Verbindungen dargestellt durch die allgemeine Formel:

$$Y'\text{-}(CF_2)_{a'}\text{-}(CFR_f)_{b'}\text{-}(CFR_{f'})_{c'}\text{-}O\text{-}[CF(CF_2X')\text{-}CF_2\text{-}O]_{n'}\text{-}CF = CF_2 \qquad (III)$$

worin

Y' = F, Cl oder Br;

a' und b' unabhängig voneinander 0 bis 3 sind;

c' = 0 oder 1;

mit der Maßgabe, daß a' + b' + c' nicht gleich 0 ist;

n' = 0-6;

Rf und Rf' unabhängig voneinander ausgewählt sind aus Br, Cl, F, Perfluoralkylradikalen mit 1 bis 10 Kohlenstoffatomen, und Chlorperfluoralkylradikalen mit 1 bis 10 Kohlenstoffatomen; und worin

X' = -F, -Cl, -Br und Mischungen davon, wenn n'>1.

2. Zellenanordnung nach Anspruch 1, dadurch gekennzeichnet, daß das Ventilmetalloxid ausgewählt ist aus TiO2, TaO2 und ZrO2.

3. Zellenanordnung nach Anspruch 1 oder 2, dadurch gekennzeichnet, daß das Ventilmetalloxid TiO2 ist und das Platingruppenmetalloxid Rutheniumoxid umfaßt.

4. Zellenanordnung nach Anspruch 1, 2 oder 3, dadurch gekennzeichnet, daß das Spaltkorrosionsschutzmaterial bei einer Temperatur unterhalb von 270 °C aus einer Lösung oder Dispersion des Materials in einem Lösungsmittel- oder Nicht-Lösungsmittel-Träger verfestigt ist.

5. Zellenanordnung nach Anspruch 4, dadurch gekennzeichnet, daß der Nicht-Lösungsmittel-Träger ausgewählt ist aus Wasser, Alkohol, Ethern oder Mischungen davon.

6. Zellenanordnung nach Anspruch 4, dadurch gekennzeichnet, daß der Lösungsmittel-Träger ausgewählt ist aus 1,2-Dibromtetrafluorethan und 1,1,2-Trichlortrifluorethan.

7. Verwendung einer gehärteten Mischung eines Oxids aus mindestens einem Platingruppenmetalloxid, einem Fluorkohlenstoffpolymerbindermaterial und, gegebenenfalls, mindenstens einem Ventilmetalloxid, als Korrosionsschutzmaterial, dadurch gekennzeichnet, daß das Fluorkohlenstoffpolymer ein Copolymer des Monomers I mit dem Monomer II ist, worin Monomer I dargestellt wird durch die allgemeine Formel:

$$CF2 = CZZ' \qquad (I)$$

worin

Z und Z' unabhängig voneinander ausgewählt sind aus -H, -Cl, - F oder -CF3;

Monomer II ein oder mehrere Monomere umfaßt, ausgewählt aus Verbindungen dargestellt durch die allgemeine Formel:

$$Y\text{-}(CF_2)a\text{-}(CFR_f)_b\text{-}(CFR_{f'})_c\text{-}O\text{-}[CF(CF_2X)\text{-}CF_2\text{-}O]_n\text{-}CF = CF_2 \qquad (II)$$

worin

Y ausgewählt ist aus -SO2Z, -CN, -COZ, und C($R^3$f)($R^4$f)OH;

Z = I, Br, Cl, F, OR oder NR1R2;

R3f und R4f unabhängig voneinander ausgewählt sind aus Perfluoralkylradikalen mit 1 bis 10 Kohlenstoffatomen;

R1 und R2 unabhängig voneinander ausgewählt sind aus H, einem verzweigten oder linearen Alkylradikal mit 1 bis 10 Kohlenstoffatomen oder einem Arylradikal;

a = 0-6;

b = 0-6;

c = 0 oder 1;

mit der Maßgabe, daß a + b + c nicht gleich 0 ist;

X = Cl, Br, F oder Mischungen davon, wenn n>1;

n = 0 bis 6; und

Rf und Rf' unabhängig voneinander ausgewählt sind aus -F, -Cl, Perfluoralkylradikalen mit 1 bis 10 Kohlenstoffatomen und Fluorchloralkylradikalen mit 1 bis 10 Kohlenstoffatomen, und gegebenenfalls einem oder mehreren Monomeren ausgewählt aus Verbindungen dargestellt durch die allgemeine Formel:

$$Y'-(CF_2)_{a'}-(CFR_f)_{b'}-(CFR_{f'})_{c'}-O-[CF(CF_2X')-CF_2-O]_{n'}-CF=CF_2 \qquad (III)$$

worin:

Y' = F, Cl oder Br;

a' und b' unabhängig voneinader 0-3 sind;

c' = 0 oder 1;

mit der Maßgabe, daß a' + b' + c' nicht gleich 0 ist;

n' = 0-6;

Rf und Rf' unabhängig voneinander ausgewählt sind aus Br, Cl, F, Perfluoralkylradikal mit 1 bis 10 Kohlenstoffatomen und Chlorperfluoralkylradikale mit 1 bis 10 Kohlenstoffatomen; und worin

X' = -F, -Cl, -Br, oder Mischungen davon, wenn n'>1.

8. Verwendung einer gehärteten Zusammensetzung nach Anspruch 7, dadurch gekennzeichnet, daß das Ventilmetalloxid ausgewählt ist aus TiO2, TaO2 und ZrO2, und das Platingruppenmetalloxid RuO2 ist.

9. Verfahren zur Vorbeugung der Spaltkorrosion von Titan in einer Elektrolysezellenanordnung, die mindestens eine Titanoberfläche mit einem Abdichtteil zum Zusammenwirken mit mindestens einer Abdichtoberfläche mindestens eines anderen Elements der Zellenanordnung zum Abdichten mindestens eines Teils der Zellenanordnung enthält, dadurch gekennzeichnet, daß man

(a) entweder den Abdichtteil der Titanoberfläche oder die zusammenwirkende Abdichtoberfläche des anderen zusammenwirkenden Elements der Anordnung oder beide mit einer Lösung oder Dispersion eines Oxids eines Platingruppenmetalls, eines Fluorkohlenstoffpolymerbindermaterials, und gegebenenfalls von mindestens einem Ventilmetalloxid in einem Lösungsmittel- oder Nicht-Lösungsmittel-Träger beschichtet, um eine Korrosionsschutzbeschichtung auf der Oberfläche auszubilden, wobei das Fluorkohlenstoffpolymerbindermaterial ein Copolymer von Monomer I mit Monomer II, wie in Anspruch 1 definiert, umfaßt,

(b) die so applizierte Lösung oder Dispersion auf dem Abdichtteil auf eine Temperatur erhitzt, die ausreicht, um ein Binden der Beschichtung auf dem Substrat zu bewirken, während das Substrat bei einer Temperatur von weniger als 270 °C gehalten wird, und

(c) die Abdichtteile in eine abdichtende Verbindung miteinander bringt.

10. Verfahren nach Anspruch 9, dadurch gekennzeichnet, daß der Nicht-Lösungsmittel-Träger ausgewählt ist aus Wasser, Alkoholen, Ethern oder Mischungen davon.

11. Verfahren nach Anspruch 10, dadurch gekennzeichnet, daß der Lösungsmittel-Träger ausgewählt ist aus 1,2-Dibromtetrafluorethan und 1,1,2-Trichlortrifluorethan.

12. Verfahren nach Anspruch 9, dadurch gekennzeichnet, daß das Ventilmetalloxid ausgewählt ist aus TiO2, TaO2 oder ZrO2.

**13.** Verfahren nach Anspruch 9, dadurch gekennzeichnet, daß das Ventilmetalloxid TiO2 ist und das Platingruppenmetalloxid Rutheniumoxid umfaßt.

**14.** Verfahren nach den Ansprüchen 9 bis 13, dadurch gekennzeichnet, daß die Menge des in der Lösung oder Disperson vorhandenen Oxids im Bereich von 0.1 bis 10 Gew.-%, bezogen auf das Gesamtgewicht des Anstrichs, liegt.

**Revendications**

**1.** Ensemble constituant une cellule d'électrolyse du type filtre presse, comprenant :

(a) au moins deux éléments d'ensemble cellule, adjacents, présentant des rebords qui fournissent des surfaces de fermeture qui coopèrent pour fermer une partie de l'ensemble, au moins l'un des éléments d'ensemble cellule ayant une surface de fermeture en titane, ladite surface de fermeture coopérant avec d'autres surfaces de fermeture et ladite surface de titane étant une surface qui est vulnérable à la corrosion avec fissuration dans les zones de fermeture, lorsque les éléments sont assemblés en un ensemble cellule fermé et soumis au milieu qui règne dans la cellule pendant son fonctionnement,

(b) une membrane interposée entre des éléments armatures d'électrode, coopérant, dont au moins l'un comprend une surface de fermeture en titane, la partie périphérique de la membrane pouvant agir comme moyen de fermeture avec d'autres moyens de fermeture pour souder les éléments armatures de cellule, et la partie non périphérique de la membrane servant à diviser la zone de la cellule qui est définie par les éléments armatures soudés, en un compartiment cathodique et un compartiment anodique,

(c) éventuellement un matériau formant joint, qui coopère avec au moins une partie des surfaces de fermeture en titane des éléments de l'ensemble cellule pour aider à la fermeture de la cellule,

ledit ensemble étant caractérisé par :

(d) un revêtement ou un film, comprenant un matériau anti-corrosion avec fissuration, destiné à empêcher la corrosion avec fissuration du titane en étant placé sur la surface de fermeture en titane elle-même ou sur la surface de fermeture d'une autre pièce qui coopère pour la fermeture avec la surface de titane, que ladite autre pièce soit un joint ou une membrane ou à la fois un joint et une membrane,

ledit revêtement ou film anti-corrosion avec fissuration comprenant un mélange durci d'un oxyde d'au moins un métal du groupe du platine et d'au moins un liant constitué d'un polymère fluorocarboné, et, éventuellement, d'au moins un oxyde de métal valve, mélange dans lequel le polymère fluorocarboné est un copolymère d'un monomère I avec un monomère II, le monomère I étant représenté par la formule générale :

$$CF_2 = CZZ' \qquad (I)$$

dans laquelle Z et Z' sont choisis indépendamment dans le groupe constitué des atomes d'hydrogène, de chlore et de fluor et du groupe $CF_3$,

et le monomère II étant constitué d'un ou plusieurs monomères choisis parmi les composés représentés par la formule générale :

$$Y-(CF_2)_a-(CFR_f)_b-(CFR_{f'})_c-O-[CF(CF_2X)-CF_2-O]_n-CF = CF_2 \qquad (II)$$

dans laquelle Y est choisi parmi les groupes $-SO_2Z$, -CN, -COZ et $-C(R_f^3)(R_f^4)OH$, Z est choisi parmi les atomes d'iode, de brome, de chlore et de fluor, et les groupes OR et $NR_1R_2$,

$R_f^3$ et $R_f^4$ sont choisis indépendamment parmi les groupes perfluoroalkyle ayant de 1 à 10 atomes de carbone, $R_1$ et $R_2$ sont choisis indépendamment parmi l'atome d'hydrogène, les groupes alkyle, linéaires ou ramifiés, ayant de 1 à 10 atomes de carbone et les groupes aryle, a est un nombre égal à 0 à 6, b est un nombre égal à 0 à 6, c est un nombre égal à 0 ou 1, étant entendu que la somme a + b + c n'est pas égale à 0, X représente un atome de chlore, de brome ou de fluor, ou un mélange de tels atomes lorsque n est supérieur à 1, n est un nombre égal à 0 à 6, et $R_f$ et $R_{f'}$ sont choisis indépendamment parmi les atomes de fluor et de chlore, les groupes perfluoroalkyle ayant de 1 à 10 atomes de carbone et les groupes fluorochloroalkyle ayant de 1 à 10 atomes de carbone,

et, éventuellement, avec un ou plusieurs autres monomères, choisis parmi les composés représentés par la formule générale :

16

EP 0 397 114 B1

$Y'-(CF_2)_{a'}-(CFR_f)_{b'}-(CFR_{f'})_{c'}-O-[CF(CF_2X')-CF_2-O]_{n'}-CF=CF_2$      (III)

dans laquelle Y' représente un atome de fluor, de chlore ou de brome, a' et b' représentent chacun, indépendamment, un nombre de 0 à 3, c' est un nombre égal à 0 ou 1, étant entendu que la somme a' + b' + c' n'est pas égale à 0, n' représente un nombre égal à 0 à 6, $R_f$ et $R_{f'}$ sont choisis indépendamment parmi les atomes de brome, de chlore et de fluor, les groupes perfluoroalkyle ayant de 1 à 10 atomes de carbone et les groupes chlorofluoroalkyle ayant de 1 à 10 atomes de carbone, et X' représente un atome de fluor, de chlore ou de brome, ou un mélange de tels atomes lorsque n' est supérieur à 1.

2. Ensemble cellule selon la revendication 1, caractérisé en ce que l'oxyde de métal valve est choisi parmi $TiO_2$, $TaO_2$ et $ZrO_2$.

3. Ensemble cellule selon la revendication 1 ou 2, caractérisé en ce que l'oxyde de métal valve est $TiO_2$ et l'oxyde du métal du groupe du platine comprend de l'oxyde de ruthénium.

4. Ensemble cellule selon l'une quelconque des revendications 1 à 3, caractérisé en ce que l'on solidifie le matériau anti-corrosion avec fissuration, à une température inférieure à 270°C, en partant d'une solution ou d'une dispersion du matériau dans un support solvant ou non solvant.

5. Ensemble cellule selon la revendication 4, caractérisé en ce que le support non solvant est choisi parmi l'eau, les alcools, les éthers et leurs mélanges.

6. Ensemble cellule selon la revendication 4, caractérisé en ce que le support solvant est choisi parmi le 1,2-dibromotétrafluoroéthane et le 1,1,2-trichlorotrifluoroéthane.

7. Utilisation d'un mélange durci d'un oxyde d'au moins un métal du groupe du platine, d'un liant constitué d'un polymère fluorocarboné, et, éventuellement, d'au moins un oxyde de métal valve, en tant que matériau anti-corrosion, caractérisée en ce que le polymère fluorocarboné est un copolymère d'un monomère I avec un monomère II, le monomère I étant représenté par la formule générale :

$CF_2=CZZ'$      (I)

dans laquelle Z et Z' sont choisis indépendamment dans le groupe constitué des atomes d'hydrogène, de chlore et de fluor et du groupe $CF_3$,

et le monomère II étant constitué d'un ou plusieurs monomères choisis parmi les composés représentés par la formule générale :

$Y-(CF_2)_a-(CFR_f)_b-(CFR_{f'})_c-O-[CF(CF_2X)-CF_2-O]_n-CF=CF_2$      (II)

dans laquelle Y est choisi parmi les groupes $-SO_2Z$, $-CN$, $-COZ$ et $-C(R_f^3)(R_f^4)OH$, Z est choisi parmi les atomes d'iode, de brome, de chlore et de fluor, et les groupes OR et $NR_1R_2$,

$R_f^3$ et $R_f^4$ sont choisis indépendamment parmi les groupes perfluoroalkyle ayant de 1 à 10 atomes de carbone, $R_1$ et $R_2$ sont choisis indépendamment parmi l'atome d'hydrogène, les groupes alkyle, linéaires ou ramifiés, ayant de 1 à 10 atomes de carbone et les groupes aryle, a est un nombre égal à 0 à 6, b est un nombre égal à 0 à 6, c est un nombre égal à 0 ou 1, étant entendu que la somme a + b + c n'est pas égale à 0, X représente un atome de chlore, de brome ou de fluor, ou un mélange de tels atomes lorsque n est supérieur à 1, n est un nombre égal à 0 à 6, et $R_f$ et $R_{f'}$ sont choisis indépendamment parmi les atomes de fluor et de chlore, les groupes perfluoroalkyle ayant de 1 à 10 atomes de carbone et les groupes fluorochloroalkyle ayant de 1 à 10 atomes de carbone,

et, éventuellement, avec un ou plusieurs autres monomères, choisis parmi les composés représentés par la formule générale :

$Y'-(CF_2)_{a'}-(CFR_f)_{b'}-(CFR_{f'})_{c'}-O-[CF(CF_2X')-CF_2-O]_{n'}-CF=CF_2$      (III)

dans laquelle Y' représente un atome de fluor, de chlore ou de brome, a' et b' représentent chacun, indépendamment, un nombre de 0 à 3, c' est un nombre égal à 0 ou 1, étant entendu que la somme a'

+ b' + c' n'est pas égale à 0, n' représente un nombre égal à 0 à 6, $R_f$ et $R_{f'}$ sont choisis indépendamment parmi les atomes de brome, de chlore et de fluor, les groupes perfluoroalkyle ayant de 1 à 10 atomes de carbone et les groupes chlorofluoroalkyle ayant de 1 à 10 atomes de carbone, et X' représente un atome de fluor, de chlore ou de brome, ou un mélange de tels atomes lorsque n' est supérieur à 1.

8. Utilisation du mélange durci selon la revendication 7, caractérisée en ce que l'oxyde de métal valve est choisi parmi $TiO_2$, $TaO_2$ et $ZrO_2$, et l'oxyde du métal du groupe du platine est $RuO_2$.

9. Procédé pour empêcher la corrosion avec fissuration du titane dans une structure d'ensemble constituant une cellule d'électrolyse, qui présente au moins une surface de titane ayant une partie fermeture destinée à coopérer avec au moins une surface de fermeture d'au moins un autre élément de l'ensemble cellule pour fermer au moins une partie de l'ensemble cellule, ledit procédé étant caractérisé par les étapes consistant à :
(a) appliquer soit sur la partie fermeture de la surface de titane soit sur la surface de fermeture coopérante dudit autre élément de l'ensemble coopérant, soit sur les deux, une solution ou une dispersion d'un oxyde d'un métal du groupe du platine, d'un liant constitué d'un polymère fluorocarboné et, éventuellement, d'au moins un oxyde de métal valve, dans un support solvant ou non solvant, pour former un revêtement anti-corrosion avec fissuration sur ladite surface, ledit liant constitué d'un polymère fluorocarboné comprenant un copolymère d'un monomère I avec un monomère II, tel que défini dans la revendication 1,
(b) chauffer la solution ou dispersion ainsi appliquée sur ladite partie fermeture, à une température suffisante pour réaliser la fixation du revêtement sur le support, tout en maintenant le support à une température inférieure à 270°C, et
(c) accoler les parties fermeture de façon à réaliser la fermeture.

10. Procédé selon la revendication 9, caractérisé en ce que le support non solvant est choisi parmi l'eau, les alcools, les éthers et leurs mélanges.

11. Procédé selon la revendication 9, caractérisé en ce que le support solvant est choisi parmi le 1,2-dibromotétrafluoroéthane et le 1,1,2-trichlorotrifluoroéthane.

12. Procédé selon la revendication 9, caractérisé en ce que l'oxyde de métal valve est choisi parmi $TiO_2$, $TaO_2$ et $ZrO_2$.

13. Procédé selon la revendication 9, caractérisé en ce que l'oxyde de métal valve est $TiO_2$ et l'oxyde du métal du groupe du platine comprend de l'oxyde de ruthénium.

14. Procédé selon l'une quelconque des revendications 9 à 13, caractérisé en ce que la proportion d'oxyde présente dans la solution ou dispersion est comprise dans l'intervalle allant de 0,1 à 10% en poids par rapport au poids total de la peinture.

FIG.1

FIG.2

19

FIG.3

FIG.4

20

FIG.5